(19) **Europäisches Patentamt**

**European Patent Office**

**Office européen des brevets**

(11) Veröffentlichungsnummer: **0 372 407**
**A2**

(12) **EUROPÄISCHE PATENTANMELDUNG**

(21) Anmeldenummer: **89122168.1**

(22) Anmeldetag: **01.12.89**

(51) Int. Cl.⁵: **F16C 9/04**

(30) Priorität: **07.12.88 DE 3841190**

(43) Veröffentlichungstag der Anmeldung:
**13.06.90 Patentblatt 90/24**

(84) Benannte Vertragsstaaten:
**DE FR GB IT SE**

(71) Anmelder: **Bayerische Motoren Werke**
**Aktiengesellschaft**
**Patentabteilung AJ-30 Postfach 40 02 40**
**Petuelring 130**
**D-8000 München 40(DE)**

(72) Erfinder: **Rosche, Paul**
**Sophie-Stehle-Strasse 10**
**D-8000 München 19(DE)**

(54) **Pleuel für Hubkolbenmaschinen, insbesondere Brennkraftmaschinen, mit einem grossen, geteilten Pleuelauge.**

(57) Bei einem Pleuel für Hubkolbenmaschinen, insbesondere Brennkraftmaschinen, mit einem großen, geteilten Pleuelauge werden zur Erzielung eines Pleuelkopfes von geringer Breite "B" die Trennflächen von Pleuelkopf und Pleueldeckel unter einem mit der Spitze zum Pleueldeckel gerichteten Winkel angeordnet. Um die so gewonnene, auf den jeweiligen Innendurchmesser eines Maschinenzylinders abgestellte Pleuelkopf-Breite voll nutzen zu können, sind der Halterung eines Pleueldeckels am Pleuelkopf dienende Schraubbolzen jeweils über ein von der Trennfläche entsprechend einer vorbestimmten Schraubbolzen-Dehnlänge beabstandetes Gewinde lösbar angeordnet. Weiter ist der Pleueldeckel über Zentrierbunde der Schraubbolzen am Pleuelkopf festgelegt.

EP 0 372 407 A2

**Pleuel für Hubkolbenmaschinen, insbesondere Brennkraftmaschinen, mit einem großen, geteilten Pleuelauge**

Die Erfindung bezieht sich auf ein Pleuel für Hubkolbenmaschinen gemäß der im Oberbegriff des Patentanspruches 1 beschriebenen Bauart.

Bei Hubkolbenmaschinen ist es für die Triebwerksmontage üblich, das an einem Kolben angelenkte Pleuel durch einen Maschinenzylinder hindurch an einen Hubzapfen der Kurbelwelle heranzubringen oder von diesem zu entfernen. Voraussetzung hierfür ist jedoch ein Innendurchmesser des Maschinenzylinders, der es erlaubt, das Pleuel mit seinem Pleuelkopf am großen, geteilten Pleuelauge durch den Maschinenzylinder hindurchzubewegen.

Bei einem beispielsweise aus der FR-PS 538 496 bekannten Pleuel der eingangs beschriebenen Bauart mit zur Pleuellängsachse senkrechter Teilung von Pleuelkopf und Pleueldeckel am großen Pleuelauge wird die Breite des Pleuelschaftes im wesentlichen vom Lagerdurchmesser für den Hubzapfen der Kurbelwelle sowie den beiden seitlichen Schraubbolzen-Pfeifen bestimmt. Günstig bei dieser Gestaltung des großen Pleuelauges ist die Anordnung von Schraubbolzen mit ausreichenden Dehnlängen. Nachteilig hierbei ist jedoch insbesondere bei einer Hubkolben-Brennkraftmaschine mit hoher Leistung aus Zylindern von relativ kleinem Durchmesser die im Hinblick auf die o.g. Pleuelkopf-Breite erforderliche Beschränkung des Hubzapfendurchmessers zur Erzielung einer steifen Kurbelwelle.

Um bei einer Hubkolbenmaschine mit relativ kleinem Zylinderdurchmesser und relativ großem Hubzapfendurchmesser der Kurbelwelle das Pleuel durch den Zylinder hindurch montieren zu können, ist es beispielsweise aus der DE-PS 864 172 bekannt, das große Pleuelauge schräg zur Pleuellängsachse zu teilen. Hierbei entspricht die für die Montagerichtung des Pleuels durch den Zylinder maßgebende Breite der Projektion des Pleuelkopfes auf eine zur Pleuellängsachse senkrechte Ebene. Damit kann das große Pleuelauge bei kleinem Zylinderdurchmesser für große Hubzapfendurchmesser gestaltet werden. Nachteilig hierbei ist jedoch in Verbindung mit der Anordnung von Schraubbolzen mit entsprechenden Dehnlängen die erhebliche Materialansammlung am großen Pleuelauge, wodurch sich die dynamischen Belastungen des Triebwerks erhöhen. Weiter ist eine Profilierung der Trennflächen von Pleuelkopf und Pleueldeckel zum gegenseitigen formschlüssigen Eingriff zur Vermeidung einer Überlastung der Schraubbolzen erforderlich.

Schließlich zeigt z. B. die DE-AS 23 37 831 noch die Möglichkeit auf, bei relativ großem Hubzapfen-Lagerdurchmesser den Pleuelkopf des zweigeteilten Pleuelauges entsprechend dem relativ kleinen Zylinderdurchmesser in der Breite entsprechend schmal durch zur Pleuellängsachse parallele Begrenzungen zu gestalten. Der damit bereichsweise geschwächte Pleuelkopf wird mit einem gabelartigen Pleueldeckel kombiniert, dessen Schenkel über zur Pleuellängsachse unter einem spitzen Winkel angeordnete Schraubbolzen gegen die Begrenzungen des Pleuelkopfes verspannt werden. Dieser Verband des großen, geteilten Pleuelauges erscheint relativ weich, wobei weiter durch die vorbeschriebene Schraubbolzenanordnung sich eine für die Triebwerksdynamik ungünstige Materialanhäufung ergibt.

Der Erfindung liegt die Aufgabe zugrunde, bei einem Pleuel nach den gattungsbildenden Merkmalen durch einfache bauliche Maßnahmen die auf einen Zylinderdurchmesser abzustellende Breite des Pleuelkopfes am großen, geteilten Pleuelauge zu erzielen ohne zusätzliche Materialanhäufung bei betriebssicherer Anordnung der Schraubbolzen von gewünschter Dehnlänge.

Diese Aufgabe wird mit den kennzeichnenden Merkmalen des Patentanspruches 1 gelöst.

Mit der Anordnung der Trennflächen von Pleuelkopf und Pleueldeckel unter einem mit der Spitze zum Pleueldeckel gerichteten Winkel wird in einfacher baulicher Maßnahme die für·den freien Durchgang durch einen Zylinder erforderliche Breite des Pleuelkopfes erzielt. Um der erfindungsgemäß erreichten Breite des Pleuelkopfes in vorteilhafter Weise einen Zylinder von kleinstmöglichem Innendurchmesser zuordnen zu können, sind die Schraubbolzen in den zur Pleuellängsachse in Richtung kleines Pleuelauge geneigt angeordneten Profilstreben lösbar angeordnet. Somit kann für die erst mit dem Pleueldeckel zusammen montierbaren Schraubbolzen in den Profilstreben vorteilhafterweise jeweils ein für eine vorbestimmte Dehnlänge des Schraubbolzens entsprechend von der Trennfläche beabstandetes Gewinde vorgesehen werden. Mit der erfindungsgemäßen Anordnung der Gewinde in den Profilstreben ist eine dynamisch ungünstige zusätzliche Materialanhäufung am Pleuelkopf vermieden bei vorteilhaft betriebssicherer Anordnung der Schraubbolzen. Zur Erzielung weiterer einfacher baulicher Maßnahmen sind die Trennflächen glatt ausgebildet, wobei zur Sicherung gegen in den Trennflächen wirkende Querkräfte der Pleueldeckel gegenüber dem erfindungsgemäß gestalteten Pleuelkopf über Zentrierbunde an den Schraubbolzen festgelegt ist. Mit dieser zwar für sich bekannten Maßnahme kann jedoch der Winkel der Trennflächen für eine geringe Breite des Pleuelkopfes in vorteilhafter Weise relativ unabhängig von der Richtung der Schraubbolzen gewählt werden, und insbesondere dann, wenn diese durch eine entsprechende erfindungsgemäße Gewindeanordnung in den Profilstreben eine maximale Dehnschaftlänge aufweisen.

Weitere vorteilhafte Ausgestaltungen sind in den Unteransprüchen angegeben. Die Erfindung eignet sich vorteilhaft für an sich bekannte, aus Leichtmetallguß hergestellte Pleuel, wobei in Fortbildung der Erfindung in den Ansprüchen 2 und 3 beschriebene konstruktive Ausgestaltungen in vorteilhafter Weise eine Steigerung der Festigkeit bzw. der Steifheit des Pleuels bei geringer Pleuelmasse sich verwirklichen lassen. Erreicht wird dies vorallem durch eine Gewindehülse aus hochfestem Werkstoff in Kombination mit die Profilstreben armierenden Langfasern, die das kleine Pleuelauge zusätzlich umschlingen. Um ferner die Schraubbolzen mit maximaler Dehnschaftlänge optimal zu nutzen zu können, ist die Gewindehülse bis zur Trennfläche des Pleuelkopfes verlängert zur Auflage einer im Leichtmetall-Pleueldeckel zum Schraubbolzen koaxial angeordneten Druckhülse, auf der deckelseitig der Kopf des Schraubbolzens auflastet.

Weiter beschreibt Anspruch 4 eine bevorzugte Ausgestaltung eines geschmiedeten Pleuels, während Anspruch 5 die Gestaltung eines aus dem vollen hergestellten Pleuels betrifft.

Die Erfindung ist anhand von in der Zeichnung dargestellten Ausführungsbeispielen beschrieben. Es zeigt jeweils teilweise geschnitten:

Fig. 1 ein Pleuel für eine Hubkolben-Brennkraftmaschine in Leichtmetallguß,

Fig. 2 ein geschmiedetes Pleuel, und

Fig. 3 ein aus dem Vollen hergestelltes Pleuel.

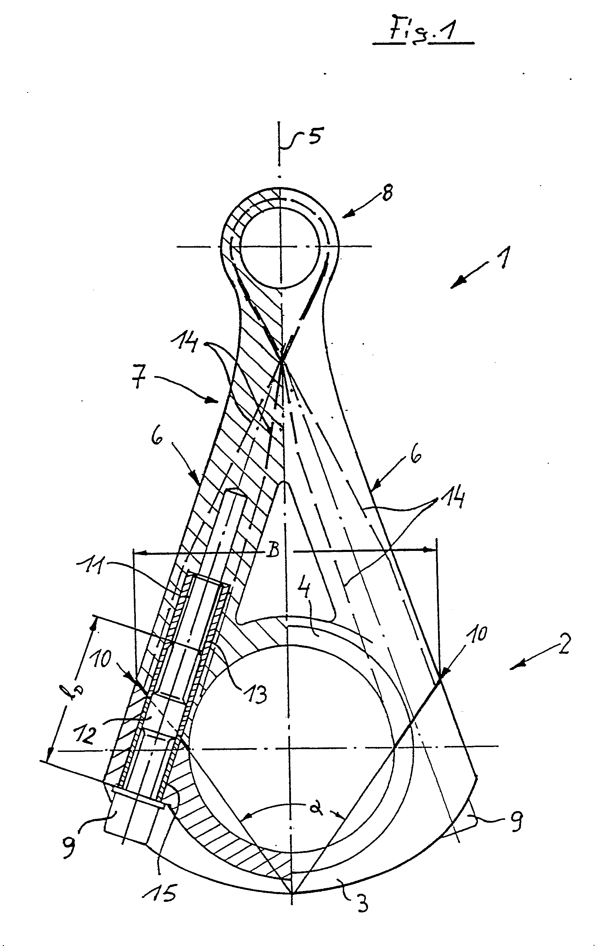

Ein nach verschiedenen Verfahren ausgeführtes Pleuel 1 nach den Fig. 1 - 3 umfaßt ein großes, geteiltes Pleuelauge 2. Das Pleuelauge 2 ist aus einem Pleueldeckel 3 und einem Pleuelkopf 4 gebildet. Der Pleuelkopf 4 ist mit zur Pleuellängsachse 5 geneigt angeordneten Profilstreben 6 eines Pleuelschaftes 7 verbunden, der seinerseits mit einem geschlossenen, kleinen Pleuelauge 8 in Verbindung steht. Weiter sind der Halterung des Pleueldeckels 3 am Pleuelkopf 4 dienende Schraubbolzen 9 in den Profilstreben 6 angeordnet.

Zur Erzielung einer auf den Innendurchmesser eines nicht dargestellten Maschinenzylinders abgestellten Breite "B" des Pleuelkopfes 4 wirkt dieser mit dem Pleueldeckel 3 über Trennflächen 10 zusammen, die unter einem mit der Spitze zum Pleueldeckel 3 gerichteten Winkel "α " angeordnet sind. Um diese durch die zur Pleuellängsachse 5 schräg angeordneten Trennflächen erreichte, angepaßte Breite "B" des Pleuelkopfes 4 voll nützen zu können, sind die Schraubbolzen 9 in den Profilstreben 6 jeweils lösbar angeordnet. Dabei wirkt jeder Schraubbolzen 9 in der jeweiligen Profilstrebe 6 mit einem Gewinde 11 zusammen, das zur Erzielung einer vorbestimmten Dehnlänge $1_D$ für den Schraubbolzen 9 in einem entsprechenden Abstand von der Trennfläche 10 angeordnet ist. Weiter weist jeder Schraubbolzen 9 einen Zentrierbund 12 im Bereich der Trennflächen 10 auf, wodurch der Lagerdeckel 3 relativ zu Pleuelkopf 4 festgelegt ist.

Das in Fig. 1 dargestellte Pleuel 1 ist aus Leichtmetallguß, wobei in den im Querschnitt rohrförmigen Profilstreben 6 von den Trennflächen 10 aus sich erstreckende Hülsen 13 aus hochfestem Werkstoff mit dem Gewinde 11 angeordnet sind. Zur weiteren Steigerung der Festigkeit des Pleuel 1 nach Fig. 1 sind in den Profilstreben 6 über den Außenumfang der Hülsen 13 verteilt Langfasern 14 angeordnet, die das kleine, geschlossene Pleuelauge 8 umschlingen. Schließlich ist beim Pleuel 1 der Fig. 1 auch der Pleueldeckel 3 aus Leichtmetallguß, wobei der Pleueldeckel 3 mit zu den Schraubbolzen 9 koaxial angeordneten Druckhülsen 15 aus hochfestem Werkstoff ausgerüstet ist. Die Druckhülsen 15 wirken in den Trennflächen 10 mit den Gewinde-Hülsen 13 des Pleuelkopfes 4 zusammen.

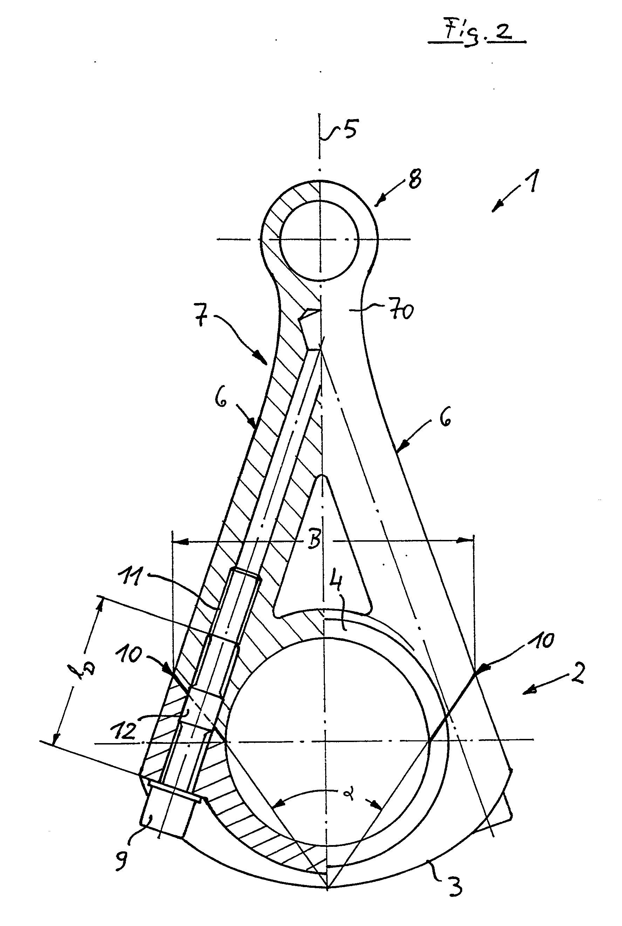

Das Pleuel 1 der Fig. 2 ist geschmiedet, wobei die Profilstreben 6 hohlgebohrt sind. Das Gewinde 11 ist hierbei in den hohlen Profilstreben 6 unmittelbar angeordnet.

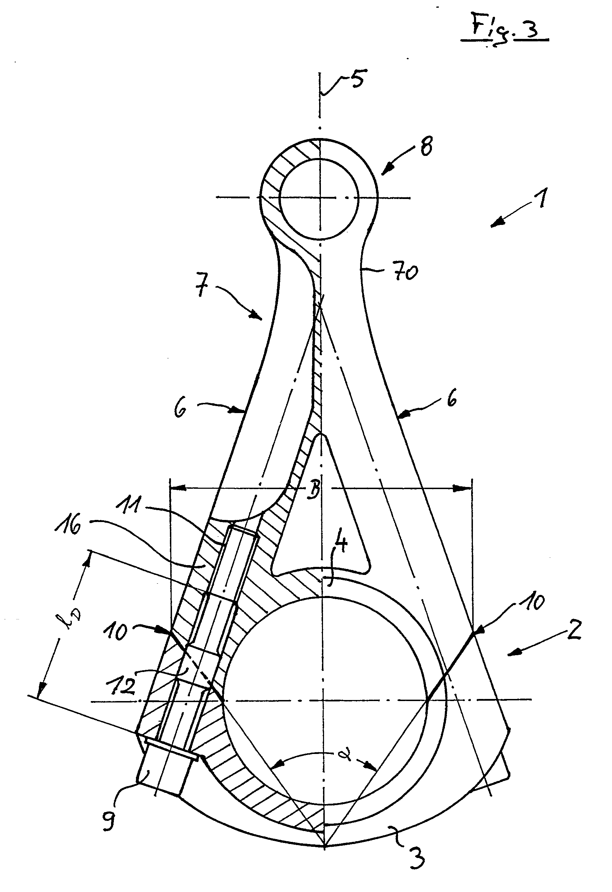

Schließlich weist das aus dem Vollen hergestellte Pleuel 1 der Fig. 3 im Querschnitt U-förmig gestaltete Profilstreben 6 auf, die pleuelkopfseitig jeweils in einen Hohlquerschnitt 16 übergehen, in dem das Gewinde 11 angeordnet ist.

**Ansprüche**

1. Pleuel für Hubkolbenmaschinen, insbesondere Brennkraftmaschinen, mit einem großen, geteilten Pleuelauge,
- dessen Pleuelkopf (4) mit zur Pleuellängsachse (5) geneigt angeordneten Profilstreben (6) eines Pleuelschaftes (7) verbunden ist, und
- wobei zur Halterung eines Pleueldeckels (3) am Pleuelkopf (4) dienende Schraubbolzen (9) in den Profilstreben (6) angeordnet sind,
dadurch gekennzeichnet,
- daß die Trennflächen (10) von Pleuelkopf (4) und Pleueldeckel (3) unter einem mit der Spitze zum Pleueldeckel (3) gerichteten Winkel (α) angeordnet sind,
- daß die Schraubbolzen (9) in den Profilstreben (6) jeweils über ein von der Trennfläche (10) entsprechend einer vorbestimmten Schraubbolzen-Dehnlänge ($1_D$) beabstandetes Gewinde (11) lösbar angeordnet sind, und

- daß die Schraubbolzen (9) im Bereich der Trennflächen (10) jeweils einen Zentrierbund (12) aufweisen.

2. Pleuel nach Anspruch 1,
- aus Leichtmetallguß mit einer mit den Schraubbolzen (9) zusammenwirkenden Armierung der Profilstreben (6),
dadurch gekennzeichnet,
- daß in den Profilstreben (6) von den Trennflächen (10) aus sich erstreckende Hülsen (13) aus hochfestem Werkstoff mit dem Gewinde (11) angeordnet sind, und
- weiter in den Profilstreben (6) über den Außenumfang der Hülsen (13) verteilt Langfasern (14) angeordnet sind,
- die ein kleines, geschlossenes Pleuelauge (8) umschlingen.

3. Pleuel nach Anspruch 1 und 2, dadurch gekennzeichnet, daß der Pleueldeckel (3) aus Leichtmetallguß ist und mit zu den Schraubbolzen (9) koaxial angeordneten Druckhülsen (15) aus hochfestem Werkstoff ausgerüstet ist.

4. Pleuel nach Anspruch 1, dadurch gekennzeichnet, daß die Profilstreben (6) eines geschmiedeten Pleuels (1, Fig. 2) rohrförmig gestaltet und mit dem Gewinde (11) ausgebildet sind.

5. Pleuel nach Anspruch 1, dadurch gekennzeichnet,
- daß die Profilstreben (6) eines aus dem vollen hergestellten Pleuels (1, Fig. 3) im Querschnitt U-förmig gestaltet sind, und
- pleuelkopfseitig jeweils in einen Hohlquerschnitt (16) übergehen, in dem das Gewinde (11) angeordnet ist.

Fig.1

Fig. 2

Fig. 3